# EUROPEAN PATENT APPLICATION

(11) **EP 4 796 187 A1**
(43) Date of publication of application: **26.08.2026**
(21) Application number: 26158429.6
(22) Date of filing: 13.02.2026
(51) Int. Cl.: A62C 3/07, A62C 3/16, H01M 10/625, B60L 50/64, H01M 10/613

(54) **METHOD AND DEVICE FOR FIRE EXTINGUISHING IN AN ELECTRIC VEHICLE BATTERY PACK**

(30) Priority: 19.02.2025 IT 202500003249
(71) Applicant: FPT Industrial S.p.A., 10156 Torino (IT)
(72) Inventor: SIMONETTI, Marco, 10156 Torino (IT)
(74) Representative: Fiume, Orazio

(57) **Abstract**

Method for extinguishing a fire in a battery pack of an electric vehicle having said battery pack (2) housed inside a container (4) equipped with a cooling circuit (8), characterised by the fact that a flow of pressurised water is introduced from the outside into said cooling circuit (8) and the flooding of said container (4) is caused following the automatic intervention of at least one maximum pressure valve (14), provided in said cooling circuit inside said container (4) and activated by the pressure of said water.

## Description

### Field of the invention

The present invention relates to a method and a device for extinguishing a fire in a lithium battery pack of an electric vehicle.

### State of the art

It is well known that rechargeable lithium-ion batteries, or more simply, the lithium batteries commonly used in electric vehicles, pose a fire risk, often due to overheating. Therefore, their temperature must be carefully monitored and they must be kept, wherever possible, in a cool, dry environment, away from heat sources and open flames, and must undergo proper periodic maintenance. For these reasons, a vehicular battery pack is generally housed in a container equipped with a battery cooling circuit and one or more vents to vent the resulting exhaust gases.

Even though appropriate measures are taken to minimize the risk of fire, this eventuality cannot be ruled out, and if it does occur, the intervention of the firefighters is necessary to minimize the negative effects of this event.

In electric vehicles, the battery pack is generally held inside the container between two hollow plates belonging to the cooling circuit through which a coolant, generally consisting of water and glycol, circulates. The container is typically equipped with one or more vents, which in the event of a fire can also be used by firefighters to introduce water into the container so that it comes into direct contact with the battery cells.

This solution has allowed firefighters to often carry out decisive interventions, but it also presents a drawback that the present invention aims to eliminate. This drawback essentially consists in the fact that the same path that the water introduced by firefighters must take to extinguish the fire also passes through the vent gases generated by the battery pack. These gases contain solid particles and form a flow that counteracts the flow of water, thus mitigating the intended effect of its use.

### Summary of the invention

The purpose of the invention is to eliminate this drawback and make firefighters response extremely rapid and effective in the event of a vehicle battery pack fire. Another purpose of the invention is to propose a solution that is also practicable in existing vehicles, with modifications that can be performed simply, quickly, and economically.

These and other purposes that will become apparent from the following description are achieved according to the invention with a method for extinguishing a fire in a lithium battery pack of an electric vehicle as defined in claim 1 and with a device as defined in claim 5.

The dependent claims describe preferred variants of the invention and form an integral part of the present specification.

### Brief description of the figures

Further purposes and advantages of the present invention will become clear from the following detailed description of an embodiment thereof (and its variants) and the accompanying drawings, which are provided purely for explanatory and non-limiting purposes, in which:
- Figure 1: shows a schematic perspective view of a vehicle battery pack container with vent openings and terminals of its cooling circuit;
- Figure 2: shows an exploded schematic perspective view, highlighting two cooling circuit plates to which the individual battery cells are attached;
- Figure 3: shows, in the same view as Figure 2, a variant of the battery pack container with the cooling plates integrated into the container;
- Figure 4: shows a schematic partial view of a battery pack container with the cooling circuit, to which both a tear-off diaphragm valve and a quick-release coupling for a fire hose are attached;
and
- Figure 5: shows, in the same view as Figure 4, but in the variant illustrated in Figure 3.

### Detailed description of some preferred embodiments of the invention

As shown in the figures, the method according to the invention aims to intervene on the cooling circuit of the battery pack 2 normally provided in an electric vehicle.

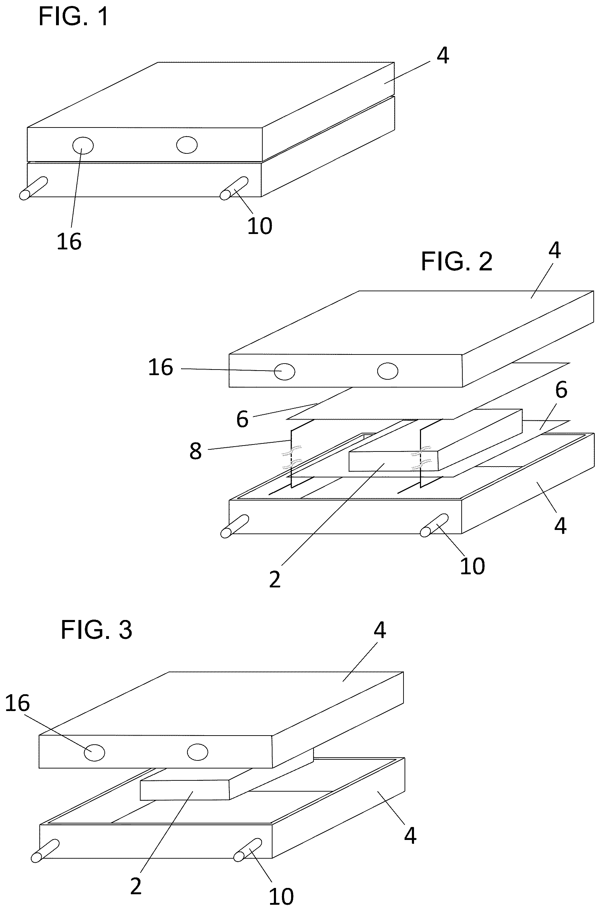

More specifically, the battery pack 2 of a vehicle is housed within a container 4 equipped with a cooling circuit which, in the example shown in Fig. 2, comprises two hollow plates 6, between which the batteries 2 are placed, bolted or otherwise secured to the plates themselves. These plates are then connected to each other and to the external circuit with pipes, which together form the cooling circuit 8 of the battery pack 2.

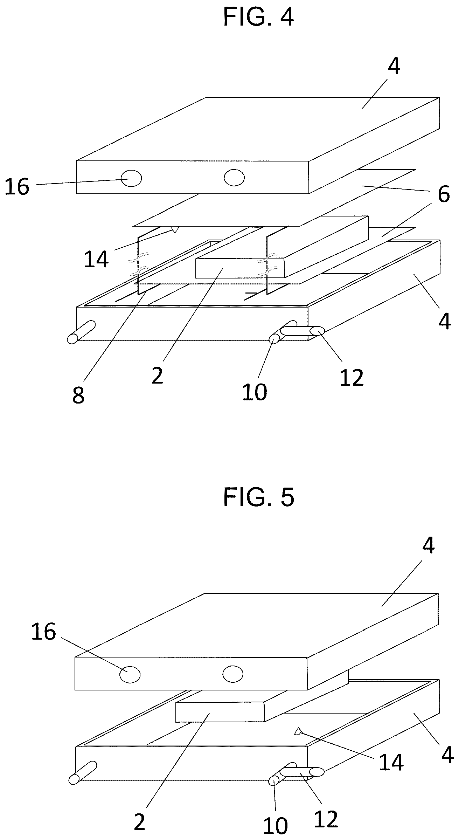

In a different embodiment, illustrated in Figures 3 and 5, the plates 6 can also be integrated into the container 4 of the battery pack 2.

The invention provides that a connection 12 for a fire hose or similar firefighter's device is applied to a duct 10 of this cooling circuit 8 of the battery pack 2, and more specifically to a duct 10 easily accessible from the outside, allowing them to pressurize the water intended to extinguish the fire directly into the cooling circuit 8 of the battery pack 2.

Conduit 10 is operatively connected to the internal cavity of hollow plate 6, passing through at least one wall of container 4.

The invention also provides that a maximum pressure valve 14 is applied to a portion of the cooling circuit inside container 4, and more specifically to a plate 6 or to a pipe of the connecting circuit 8 that connects conduit 10 to hollow plate 6. This valve is configured to open automatically when a predetermined pressure value is reached within the circuit itself.

Therefore, plate 6 forms an integral part of the cooling circuit, together with the connecting circuit 8 that connects conduit 10 to hollow plate 6.

Therefore, cooling circuit 8 is separate from the internal volume of container 4. Therefore, the battery casing 2 does not come into direct contact with the refrigerant until the maximum pressure valve 14 is forced to open by the introduction of pressurized water from the outside.

In other words, the container floods only and exclusively when pressurized water is introduced from the outside into the cooling circuit 8.

In fact, the reason why two opposing plates 6 are shown attached to respective faces of the battery pack is that the remaining faces of the battery pack remain free to come into contact with the pressurized water introduced into the volume inside the container when pressurized water is introduced from the outside under pressure.

The cooling circuit 8 is operationally connected to an external radiator (not shown) for the purpose of dissipating the heat generated by the batteries.

This pressure relief valve 14 can be of any type: for example, a tearable diaphragm valve, which requires replacement or resetting after an intervention, or a spring-loaded valve, which closes after an intervention when the pressure inside the cooling circuit 8 has returned below the set value.

Regardless of the type of maximum pressure valve 14, its function is to open the cooling circuit of the battery pack 2 with the pressure of the water that is introduced into it by the firefighters and that can escape through the valve itself to invade the entire internal space of the container 4 and thus come into direct contact with the batteries 2.

Therefore, unlike traditional solutions, which involve introducing water into the container 4 of the battery pack 2 through a vent opening 16, which is typically provided in the container itself, but which allows its use by firefighters only after the effect of the vent gases generated by the batteries 2 and which must flow out through that same opening has subsided, the present invention proposes flooding the container 4 with pressurized water introduced by the firefighters into the cooling circuit 8 and which from there passes into the container 4 through the maximum pressure valve 14, which is opened by the pressure of the water itself.

Therefore, the container is flooded only when the water introduced by the firefighters develops a pressure higher than the calibration pressure of the valve 14.

If the connection 12 for the firefighters' hose is of the rapid type, the intervention of the firefighters can be immediate, thus enhancing its effectiveness.

Since different types of standardized quick coupling can be provided, the invention can advantageously provide that several different quick couplings are applied to that duct 10 of the cooling circuit 8 or even to different ducts, to which the firefighters can selectively connect their nozzle.

### Advantages of the invention

The solution now proposed, on the one hand, allows for quick and easy modification of the battery pack cooling circuit, even in existing vehicles, and, on the other, allows for quick connection of the firefighters' hose to this cooling circuit, thus allowing for immediate intervention in case of emergency.

The present invention has been illustrated and described in some of its preferred embodiments, but it is understood that practical variations may be made thereto, without, however, departing from the scope of protection of this industrial invention patent.

## Claims

1. Method for extinguishing a fire in a battery pack of an electric vehicle having said battery pack (2) housed inside a container (4) equipped with a cooling circuit (8), wherein the cooling circuit comprises at least one cavity inside at least one hollow plate (6) arranged in the container (4) in direct contact with a face of the battery pack (2), the method comprising a step of introducing a flow of pressurized water from the outside into said cooling circuit (8), causing a flooding of an internal volume of said container (4) following the automatic intervention of at least one maximum pressure valve (14), associated with said cooling circuit inside said container (4) and activated by the pressure of said pressurized water.

2. Method according to claim 1 **characterized in that** said container (4) is flooded by the intervention of a membrane valve tearable when a predetermined pressure value is exceeded.

3. Method according to claim 1 and/or 2, **characterised by** the fact that said flow of pressurised water is introduced through a connection (12) provided in a duct (10) of said cooling circuit (8) in a position accessible from the outside.

4. Method according to claim 3, **characterised by** the fact that said flow of pressurised water is introduced through a standardised quick coupling (12).

5. Device for extinguishing a fire in a battery pack of an electric vehicle, in which said battery pack (2) is housed inside a container (4) equipped with a cooling circuit (8), **characterised by** the fact that said cooling circuit comprises at least one connection (12) for the introduction from the outside of a flow of pressurised water and at least one maximum pressure valve (14), configured to intervene automatically when a predetermined pressure value is exceeded within said cooling circuit (8) and to flood, following said intervention, said container (4).

6. Device according to claim 5, **characterized in that** said pressure relief valve (14) is of the tearable membrane type.

7. Device according to claim 5, **characterized in that** said pressure relief valve (14) is of the spring type.

8. Device according to one or more of claims 5 to 7, **characterized in that** said connection (12) is applied to a duct (10) of said cooling circuit accessible from the outside.

9. Device according to one or more of claims 5 to 8, **characterized in that** it comprises several standardized connections (12) of different types.
